# EUROPÄISCHE PATENTANMELDUNG

(11) **EP 0 574 842 A1**
(43) Veröffentlichungstag der Anmeldung: **22.12.1993**
(21) Anmeldenummer: 93109356.1
(22) Anmeldetag: 11.06.1993
(51) Int. Cl.: B65B 13/32, B29C 65/20, B65B 51/16, H05B 6/14

(54) **Vorrichtung zum Verschweissen von thermoplastischen Bändern, insbesondere in Umschnürungsmaschinen**

(30) Priorität: 19.06.1992 DE 9208165 U
(71) Anmelder: Sander GmbH, D-42285 Wuppertal (DE)
(72) Erfinder: Schorr, Siegfried, D-5600 Wuppertal 2 (DE); Führers, Heinz-Josef, D-4048 Grevenbroich (DE)
(74) Vertreter: Rieder, Hans-Joachim, Dr.

(57) **Zusammenfassung**

Die Erfindung betrifft eine Vorrichtung zum Verschweißen von übrelappenden Abschnitten thermoplastischer Bänder (6), insbesondere in Umschnürungsmaschinen, mit einer aufheizbaren Schweißzunge (12), die eine vorzugsweise galvanisch aufgebrachte Oberflächenbeschichtung besitzt und schlägt zur Erzielung einer optimalen Ausgestaltung vor, daß die Oberflächenbeschichtung ganz oder überwiegend aus einem Edelmetall besteht.

## Beschreibung

Die Erfindung betrifft eine Vorrichtung gemäß Gattungsbegriff des Hauptanspruches.

Bei den bekannten Lösungen dieser Art ist die Schweißzunge galvanisch mit einer Chromschicht ausgestattet. Beim Verschweißen ergibt sich eine erhebliche Dampfentwicklung. Dies ist umwelttechnisch von Nachteil. Auch ergibt sich nach mehreren Schweißungen ein gewisser Belag auf der Schweißzunge. Dieser verlangt die Zuführung höherer Heizleistung, um die Schweißzunge überhaupt einsatzfähig zu halten.

Aufgabe der Erfindung ist es, eine gattungsgemäße Vorrichtung so auszugestalten, daß die vorerwähnten Nachteile beseitigt sind.

Erreicht ist dies dadurch, daß die Oberflächenbeschichtung ganz oder überwiegend aus einem Edelmetall besteht. Sehr bewährt hat sich in dieser Beziehung das Material Gold als Oberflächenbeschichtung.

Auch kommt die Wahl von Edelmetallegierungen in Frage, seien es Legierungen von Edelmetallen ausschließlich, wie z.B. Weißgold oder seien es Legierungen eines Edelmetalles mit anderen gattungsähnlichen Metallen.

Zufolge dieser Ausgestaltung ist eine Vorrichtung zum Schweißen von überlappenden Abschnitten thermoplastischer Bänder, insbesondere in Umschnürungsmaschinen, gegeben, bei denen zufolge der entsprechenden Oberflächenbeschichtung der Schweißzunge sowohl die Bildung von Dämpfen nahezu vollständig verhindert ist. Dies gilt jedenfalls für die überwiegend z.B. in Umschnürungsmaschinen eingesetzten Bänder aus PET- oder PP-Materialien. Auch entfällt der Nachteil der Bildung einer Oxydationsbeschichtung auf der Schweißzungenoberfläche, so daß sich im Endeffekt ergibt, daß die Beheizung der Zunge reduziert werden kann. Die Reduktion liegt im Bereich von 450° auf 380° Celsius für PET-Bänder.

Die günstigste und einfachste Auftragungsmöglichkeit ist das Galvanisieren. Die Zunge selbst ist dabei vorzugsweise vor der Galvanisierung oberflächenpoliert.

Der Gegenstand der Erfindung ist auf der beiliegenden Zeichnung in einem Ausführungsbeispiel dargestellt. Es zeigt:
- Fig. 1: eine teilweise Ansicht einer Schließvorrichtung einer Umschnürungsmaschine mit vom Umschnürungsband umfaßtem Packstück und in die Umschnürungsbandebene vorgesteuerter Schweißzunge,
- Fig. 2: in Einzeldarstellung eine Ansicht einer an einem Träger sitzenden Schweißzunge,
- Fig. 3: die klappfigürliche Darstellung der Fig. 2,
- Fig. 4: eine Draufsicht auf die Schweißzunge, und
- Fig. 5: in stark vergrößerter Darstellung den Schnitt nach der Linie V-V in Fig. 4 durch die mit Gold beschichtete Schweißzunge.

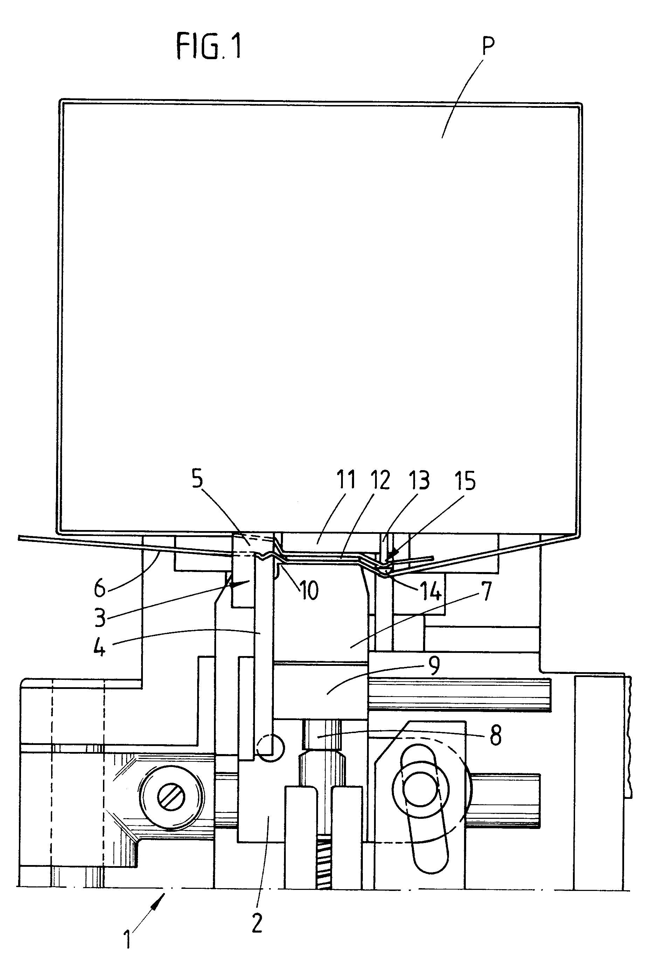

Mit der Ziffer 1 ist in Fig. 1 eine unterhalb eines Packstückes P angeordnete Schließvorrichtung einer Umschnürungsmaschine veranschaulicht. Die Schließvorrichtung 1 besitzt einen Support 2, welcher Träger eines Greifers 3 ist. Dieser setzt sich zusammen aus einer Greiferhalteplatte 4 und einer dieser zugeordneten Klemmbacke 5. In bekannter Weise ist die Greiferhalteplatte 4 mit einer quer zum Umschnürungsband 6 ausgerichteten Kerbe versehen, der eine entsprechend geformte Rippe der Klemmbacke 5 gegenüberliegt. Das Umschnürungsband besteht vorzugsweise aus PET- bzw. PP-Material.

Ferner trägt der Support 2 eine Druckbacke 7, von deren Unterseite ein Steuerzapfen 8 ausgeht, welcher einen Führungsklotz 9 des Supports 2 durchgreift. Es ist eine undrehbare Anordnung dieser Druckbacke 7 gewährleistet. Mittels einer nicht dargestellten Feder ist die Druckbacke 7 in Richtung des Führungsklotzes 9 federbelastet, also in Öffnungsrichtung. Die Druckbacke 7 bildet an ihrer oberen, der Greiferhalteplatte 4 zugekehrten Kante eine Messerschneide 10 aus.

Es handelt sich bezüglich der Druckbacke 7 um die untere, welcher eine obere Druckbacke 11 gegenüberliegt. Mittels nicht dargestellter Steuermittel kann diese obere Druckbacke 11 quer zur Umschnürungsmittelebene verlagert werden. In dem Bereich zwischen der unteren und oberen Druckbacke 7, 11 ist eine Schweißzunge 12 vorverlagerbar. Mittels dieser werden die einander zugekehrten Flächen der Umschnürungsband-Enden des um das Packstück P herumgelegten Bandes 6 angeschmolzen, so daß nach Zurückfahren der Schweißzunge 12 die betreffenden Umschnürungsband-Enden unter Einsatz der Druckbacken 7, 11 miteinander verschweißt werden.

Die obere Druckbacke 11 ist Träger eines Klemmstückes 13, welches mit einem Klemmschieber 14 eine Bandklemme 15 darstellt. Der betreffende Klemmschieber 14 ist seinerseits quer zur Umschnürungsebene verlagerbar.

Gemäß Fig. 1 liegt die Stellung der Schließvorrichtung 1 vor, in welcher der Greifer 3 und die Bandklemme 15 ihre Schließstellung einnehmen.

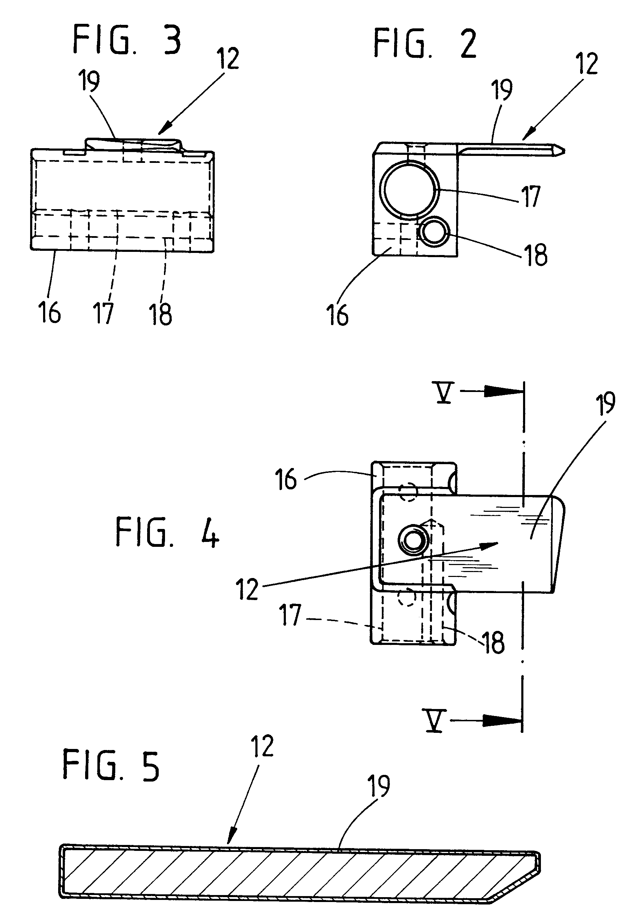

Im Detail ist die Schweißzunge 12 in den Fig. 2-5 veranschaulicht. Die Schweißzunge 12 ladet materialeinheitlich von einem Träger 16 aus. Dessen Längserstreckung verläuft quer zur Schweißzunge 12. Der Träger 16 beinhaltet Längsbohrungen 17,18 unterschiedlich großen Durchmessers derart, daß die Längsbohrung 17 der Schweißzunge 12 näherliegt. Beheizt wird die Schweißzunge 12 auf elektrischem Wege, was nicht näher veranschaulicht ist. Es genügt, die Schweißzunge 12 auf eine Temperatur von ca. 380° Celsius bei Verwendung von PET-Bändern zu bringen und zu halten. Bei Verarbeitung von PP-Bändern genügt eine Temperatur von etwa 250° Celsius.

Die Schweißzunge 12 ist oberflächenpoliert. Der Träger 16 ist von dieser Oberflächenpolierung nicht betroffen. In einem Galvanobad erhält die Schweißzunge 12 mit dem Träger 16 eine Oberflächenbeschichtung 19 aus einem Edelmetall. Beim Ausführungsbeispiel besteht dieses aus Gold. Es könnte jedoch auch Weißgold, Platin oder eine entsprechende Edelmetallegierung sein.

Aufgrund dieser besonderen Oberflächenbeschichtung 19 treten während des Schweißvorganges, also beim Anschmelzen der Umschnürungsmittel-Enden und Verschweißen derselben keine toxischen Dämpfe auf. Der Auftrag der Oberflächenbeschichtung erfolgt in der Stärke, daß ein Ablösen auch nach langer Gebrauchsdauer nicht auftritt. Ferner bildet sich auch kein Belag auf der Oberfläche der Schweißzunge 12.

Alternativ wäre es auch möglich, die Schweißzunge aus einem entsprechenden Vollmaterial herzustellen und so zu dimensionieren, daß die Stabilität gewährleistet ist.

Die in der vorstehenden Beschreibung, der Zeichnung und den Ansprüchen offenbarten Merkmale der Erfindung können sowohl einzeln als auch in beliebiger Kombination für die Verwirklichung der Erfindung von Bedeutung sein. Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen.

## Patentansprüche

1. Vorrichtung zum Verschweißen von überlappenden Abschnitten thermoplastischer Bänder, insbesondere in Umschnürungsmaschinen, mit einer aufheizbaren Schweißzunge, die eine vorzugsweise galvanisch aufgebrachte Oberflächenbeschichtung besitzt, dadurch gekennzeichnet, daß die Oberflächenbeschichtung (19) ganz oder überwiegend aus einem Edelmetall besteht.

2. Vorrichtung nach Anspruch 1 oder insbesondere danach, dadurch gekennzeichnet, daß die Oberflächenbeschichtung (19) aus Gold besteht.

3. Vorrichtung nach Anspruch 1 oder insbesondere danach, dadurch gekennzeichnet, daß die Oberflächenbeschichtung (19) aus einer Edelmetallegierung besteht.
